# EUROPEAN PATENT APPLICATION

(11) **EP 2 332 887 A1**
(43) Date of publication of application: **15.06.2011**
(21) Application number: 10192364.7
(22) Date of filing: 24.11.2010
(51) Int. Cl.: C02F 1/66, C02F 1/68, C02F 1/52, C02F 103/28, C02F 5/00

(54) **A method and an arrangement for treating process water**

(30) Priority: 30.11.2009 FI 20096259
(71) Applicant: Linde Aktiengesellschaft, 80331 München (DE)
(72) Inventor: Leino, Hannu, FI-02320, Espoo (FI); Siltala, Simo, FI-01150, Söderkulla (FI)
(74) Representative: Söderman, Lisbeth Karin

(57) **Abstract**

The invention concerns a method for treating water comprising calcium ions. The method is characterized by the steps of dividing the stream of water in a tube into a first stream and a second stream using a dividing element arranged inside the tube, adding alkali into the second stream to raise the pH level to at least 8.5 and to precipitate the calcium ions into calcium carbonate in the second stream, and combining the first stream and the second stream together. Carbon dioxide is used for the precipitation. Also an arrangement suitable for performing the method and a paper product manufactured utilizing the method or arrangement is disclosed.

## Description

### BACKGROUND OF THE INVENTION

The invention relates to processing of water e.g. in a papermaking process.

Some amount of calcium ions is acceptable in the water circulation of a paper making process. The modern paper making processes utilize closed water circulation in an increasing manner. In such processes, the concentration of calcium ions tends to increase over time, thus reducing the quality of the water flowing in the circulation. Fresh water taken into the process may also include high level of calcium ions.

Various methods and apparatuses to control the concentration of calcium ions in a water stream are known in the art.

EP1402111 discloses treatment of process water circulating in a paper making process. The method involves precipitating calcium ions in separated process water by treatment with carbon dioxide gas, removing precipitate and returning water to the paper making process.

EP1008561 discloses a calcium hardening reducing method which controls the calcium hardness by precipitating calcium ion in processing water into calcium carbonate by addition of sodium carbonate or sodium hydrogen carbonate to white water short-circulated in paper manufacturing process.

One problem with the solutions of the prior art is the uncontrolled build-up of calcium carbonate onto the structures, e.g. the inner walls of tubes, of the paper making process.

An object of the invention is to provide a method and an arrangement for simple, yet efficient, controllable and continuously operable reduction of the concentration of calcium ions in a stream of water, suitably e.g. in a closed water circulation of a paper making process. One goal of the reduction of concentration of calcium ions is to prevent accumulation of calcium ions in a closed water circulation. Preferably, the arrangement should be able to prevent uncontrollable build-up of precipitated calcium carbonate in a process, e.g. a paper making process.

### BRIEF DESCRIPTION OF THE INVENTION

An aspect of the invention is a method for precipitating calcium carbonate in water which comprises calcium ions. The method is characterized by the steps of dividing a stream of water flowing in a tube into a first stream and a second stream using a dividing element arranged inside the tube, adding alkali into the second stream to raise the pH level to at least 8.5 and to precipitate the calcium ions into calcium carbonate in the second stream, and combining the first stream and the second stream together.

The dividing element may comprise e.g. a partition wall between the first stream and the second stream. In an embodiment, the dividing element comprises a tube.

The build-up of the precipitated calcium carbonate to the structures of a process equipment, e.g. to the tubes of a paper making machine, is generally to be avoided. However, if the build-up is unavoidable, the degree of precipitation may be adapted to be such, e.g. high enough, that the build-up of calcium carbonate occurs in a build-up gathering structure, e.g. onto the structures of the dividing element or structures inside or downstream of the dividing element, where the build-up of calcium carbonate is manageable and controllable e.g. by cleaning.

The alkali may comprise hydroxide or carbonate or bicarbonate ions.

The water is preferably industrial process water which comprises at least 90% of water. Thus, the water to be treated according to the present invention comprises both clean waters and waters containing up to 10 % of solid particles. The water typically consists of from 95% to 99% or more water. The water may comprise fiber, e.g. papermaking pulp fibers. The fiber content of papermaking process water is typically less than 0.1% while papermaking pulp suspensions and stock typically contain more than 0.1%, e.g. 1% or 5% fibers.

In an embodiment, carbon dioxide is added into the water stream, suitably prior to dividing the stream and/or upstream of the addition of alkali. Carbon dioxide may be added also into the divided stream to ascertain that precipitation is as complete as possible. The carbon dioxide is typically introduced in gaseous form.

The method may also comprise the step of intermittently or continuously cleaning the dividing element and/or other build-up gathering structure gathering at least some of the precipitated calcium carbonate e.g. in the vicinity of the dividing element. The step of cleaning the build-up gathering structure, e.g. the dividing element, may comprise e.g. injection of a strong acid such as hydrochloric acid into the second stream, vibrating the dividing element, e.g. by means of ultrasound, and/or mechanically cleaning the dividing element, e.g. by means of a suitable cleaning device, e.g. a brush or a plurality of wires.

In an embodiment, the build-up gathering structure may comprise flexible material, e.g. some suitable plastic. The cleaning of such dividing element may be accomplished e.g. by bending the flexible material.

In an embodiment, the method may comprise the step of dynamically altering the mutual proportions of the flow rates of the first stream and the second stream.

The method may also comprise the step of removing at least some of the precipitated calcium carbonate from the second or the combined first and second stream. This may be achieved by some suitable means, e.g. a cyclone that is arranged to be located after the arrangement of an embodiment of the present invention.

The alkali may be selected from e.g. the following: sodium or potassium hydroxide, sodium or potassium carbonate or bicarbonate.

The bicarbonate may be stoichiometric or non-stoichiometric bicarbonate.

The stream of water may be connected to a paper making process, suitably to an essentially closed water circulation. The essentially closed water circulation may mean e.g. a process water circulation where at least a part, e.g. at least 50%, 70% or 90% of the process water is re-circulated. The stream of water may also comprise water in an industrial or municipal water treatment plant.

Another aspect of the present invention is an arrangement for treating water comprising calcium ions. The arrangement is **characterized in that** it comprises means for dividing the stream of water flowing in a tube into a first stream and a second stream using a dividing element arranged inside the tube, means for adding alkali into the second stream to raise the pH level of the second stream to at least 8.5 and to precipitate the calcium ions into calcium carbonate in the second stream, and means for combining the first stream and the second stream together.

The arrangement may comprise e.g. an inner tube arranged inside an outer tube. Suitably, the inner tube acts as the dividing element of the arrangement. The second stream may be arranged to flow in the inner tube of the arrangement. The diameter of at least part of the inner tube may be adapted to be adjustable. Also other arrangements for dividing the stream of water are possible. For example, the first stream may be directed to flow in the inner tube and the second stream may flow outside the inner tube.

The arrangement may be adapted to be connectable to a water circulation of a paper making process. Preferably, the water circulation is a closed circulation.

In an embodiment, the arrangement is adapted to be located before the pulper unit of a papermaking process.

In an embodiment, the arrangement is adapted to be located after a fiber loading unit of a papermaking process.

The arrangement may also comprise means for intermittently or continuously cleaning the dividing element or other calcium carbonate build-up gathering structure. The means for cleaning the build-up gathering structure may comprise e.g. means for injecting some suitable liquid, e.g. hydrochloric acid for dissolving any precipitation on the walls of the inner tube, into the second stream and/or means for mechanically moving, e.g. vibrating, e.g. by means of ultrasound, and/or mechanically cleaning the build-up gathering structure, e.g. by means of a suitable cleaning device, e.g. a brush or a plurality of wires.

Yet another aspect of the present invention is a process for producing paper utilizing the method or arrangement of the various aspects of the invention.

### DETAILED DESCRIPTION OF THE INVENTION

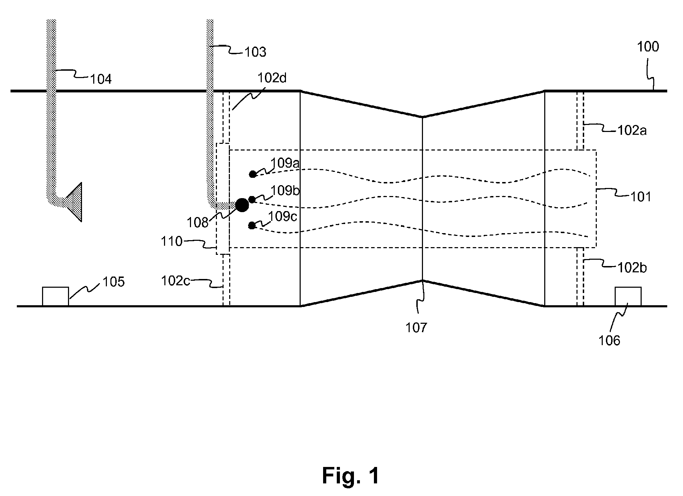

Figure 1 depicts an exemplary embodiment of the arrangement of the present invention. The arrangement comprises a tube 100 adapted to contain a stream of water. Inside the tube 100 is a second tube 101 through which a part of the stream of water is led. The tube 101 thus acts as a dividing element that divides the stream of water into two streams. The tube 101 is supported inside the tube 100 using support members 102a-d. The arrangement shown in figure 1 is suitably adapted to be a part of a substantially closed water circulation, e.g. in a papermaking machine.

The tube 101 may have a rigid or flexible structure. A rigid structure may be constructed e.g. from stainless steel. A flexible structure may be constructed e.g. from a suitable plastic or rubber material.

In an embodiment, there may be a plurality of tubes 101 arranged e.g. parallelly inside the tube 100.

In an embodiment, the tube 101 may be attached directly to the inner wall of the tube 100.

In an embodiment, the diameter of the tube 100 is 100 to 400 mm, e.g. 200mm and the diameter of the inner tube 101 is 50 to 200 mm, e.g. 100mm. The length of the tube 101 may be e.g. at least 150, 200 or 300mm and up to 400, 500 or 1000 mm. In a preferred embodiment, the length of the tube 101 is 300mm and approximately 50% of the flow of the tube 100 flows through the tube 101.

Preferably, although not necessarily, the tube 100 has a narrower section 107 for the purpose of e.g. causing a pressure difference in the tube 100. The pressure difference may increase the proportion and speed of water flowing through the tube 101. The section 107 may also cause turbulences in the flow of water. Turbulences may contribute to the precipitation process occurring in the tube 101.

The support members 102a-d may be tubes that have small holes drilled into them. Small volumes of suitable liquid, e.g. water, may be lead through the holes into the tube 100 for the purpose of cleaning the surfaces of the support members from e.g. fibers flowing in the stream of water flowing in the tube 100.

A circular tube 110 may be attached to the front of the tube 101. Like the support members 102a-d, the tube 110 may have small holes drilled into it for the purpose of e.g. cleaning the surface of the circular tube 110 from e.g. fibers and/or injecting suitable acid, e.g. hydrochloric acid at the interior wall of the tube 101.

The water that flows inside the tubes 100 and 101 comprises calcium ions. The concentration of the calcium ions may be so high that there is a risk for precipitation of calcium carbonate and scaling. Depending on the process, the calcium content may be as high as 200 to 800 mg/l. In a closed water circulation of a papermaking machine, for example, the concentration of calcium ions tends to increase unless actions are taken to reduce the concentration.

In many papermaking processes the raw material contains recycled paper with high amounts of calcium carbonate. When the recycled paper is repulped for being processed into paper or board, the calcium carbonate enters the process waters and causes high levels of calcium ions in the stock and in the circulating water flows.

In processes for increasing the amount of calcium carbonate filler in the fibers of paper or board, a so called "fiber loading" process is used wherein calcium hydroxide and carbon dioxide is reacted so that calcium carbonate precipitates on and in the fibers. The stock and process waters after such a fiber loading process contain high levels of non-precipitated calcium and this may cause severe problems in the papermaking process.

When the calcium ion level is too high, a part of the calcium ions needs to be removed from the water by some suitable precipitation means. The present invention provides a process and arrangement in response to that need.

In the shown embodiment, some suitable alkali, e.g. sodium hydroxide, is injected into the stream flowing inside tube 101 using injection tube 103 to elevate the pH level of the water to e.g. at least 8.5, 9 or 10. Preferably, the sodium hydroxide has a high concentration, e.g. at least 30%, 40% or 50%. The high concentration of alkali in the divided stream causes a local pH shock which almost instantaneously precipitates calcium ions as calcium carbonate. In a preferred embodiment, an alkali concentration of 50 to 55% is used. In an embodiment, the precipitation is adapted to be so instantaneous and significant that at least some build-up of calcium carbonate will occur, for example onto the inner wall of tube 101.

In the shown embodiment, also carbon dioxide is injected into the stream of water using injection tube 104. In a preferred embodiment, gaseous carbon dioxide is added to the stream of water before the inner tube 101. However, carbon dioxide may be added to the stream of water also inside the inner tube 101 or after the inner tube 101. Because of the high concentration of the alkali, very favorable conditions for quick precipitation of calcium carbonate are created in the beginning of the tube 101 around the nozzle 108. Turbulences in the stream of water caused e.g. by the section 107 or by some other suitable static or dynamic mixing elements e.g. in the inner tube may also contribute positively to the precipitation conditions.

The arrangement may further comprise measuring and control means for controlling the process of reducing the calcium ion concentration of the stream of water. For example, there may be one or more sensors 105, 106 for measuring the concentration of calcium ions, the pH, the alkalinity, etc. of the water stream in the inner or outer tubes. The sensors may be located e.g. before and/or after the inner tube 101. The various sensors may be connected to a control system comprising e.g. a computer. The control system may control e.g. the injection rate of carbon dioxide and sodium hydroxide into the flow of water.

In addition to the section 107, the arrangement may also have means for controlling the proportion of water led through the inner tube 101. This way, together with the control of the amount of alkali used, the desired amount of calcium precipitation may be controlled. For example, there may be means for expanding and contracting the diameter of at least part of the inner tube 101. Such means are readily apparent to a person skilled in the art and therefore they are not discussed in detail herein.

When the calcium ions precipitate into calcium carbonate inside the tube 101, a significant proportion of the calcium carbonate may stick onto the wall of the inner tube 101. Build-up of the calcium carbonate onto the wall of the inner tube 101 is preferred because the removal of the calcium carbonate from the inner tube 101 is significantly easier than from the tubes of e.g. a papermaking process that follow after the arrangement of an embodiment of the present invention. In a preferred embodiment, the arrangement therefore comprises means, e.g. wires 109a-c of suitable length attached from one end onto the inner wall of the tube 101 for removing the built-up precipitated calcium carbonate from the wall of the tube 101. Alternatively or additionally, the means may also comprise means for intermittently or periodically injecting some suitable acid, e.g. hydrochloric acid, into the tube 101 e.g. through the tube 103 or through the small holes of the circular tube 110. There may also be means for flexing, vibrating or hitting the tube 101 intermittently, periodically or continuously.

The properties, e.g. the dimensions, shape and material of tube 101 and/or various operating parameters of an embodiment of the present invention may be selected so that the majority of possible build-up of calcium carbonate because of the precipitation of calcium ions occurs inside the tube 101 or in some other suitable build-up gathering structure downstream of the tube 101 (not shown in figure), and no or insignificant build-up of calcium carbonate occurs e.g. onto the walls of tube 100 or any tube after the arrangement of an embodiment of the present invention.

Advantageously, little or no build-up of calcium carbonate occurs outside the tube 101. Thus, clean-up of only the tube 101 is required. Without the dividing element, such as the tube 101, the precipitated calcium carbonate might stick onto the wall of the tube 100 which would be significantly more difficult to keep clean.

The present invention may be used in a process for making paper, pulp or board by any of the processes known to those skilled in the art, such as those described in the book series called Papermaking Science and Technology edited by J. Gullichsen and H. Paulapuro. The fresh water as well as the circulating process streams including long circulation water, clear filtrate, short circulation water, thick stock or thin stock etc. may be processed according to the present invention to remove calcium ions from the said streams by the process and/or arrangement described above.

To a person skilled in the art, the foregoing exemplary embodiments illustrate the model presented in this application whereby it is possible to design different processes and arrangements, which in obvious ways to the expert, utilize the inventive idea presented in this application.

## Claims

1. A method for precipitating calcium carbonate in water which comprises calcium ions, **characterized by** the steps of:
a. dividing a stream of said water flowing in a tube (100) into a first stream and a second stream using a dividing element (101) arranged inside the tube,
b. adding alkali into the second stream to raise the pH level to at least 8.5 and to precipitate the calcium ions into calcium carbonate in the second stream, and
c. combining the first stream and the second stream together.

2. A method according to claim 1, **characterized in that** said dividing element (101) comprises a tube.

3. A method according to claim 1 or 2, **characterized by** the step of adding carbon dioxide into said stream of water or into said first or said second stream.

4. A method according to claim 3, wherein said carbon dioxide is added upstream of said addition of alkali.

5. A method according to any of claims 1 to 4, **characterized in that** said alkali is selected from the following: sodium or potassium hydroxide, sodium or potassium carbonate or bicarbonate, and a mixture of these.

6. A method according to any of claims 1 to 5, **characterized by** the step of intermittently or continuously cleaning a build-up gathering structure (101) by removing said precipitated calcium carbonate from the wall of the build-up gathering structure.

7. A method according to any of claims 1 to 6, **characterized by** the step of dynamically altering the mutual proportions of the flow rates of the first stream and the second stream.

8. A method according to any of claims 1 to 7, **characterized by** the step of removing at least some of the precipitated calcium carbonate from said second or from the combined said first and said second stream.

9. A method according to any of claims 1 to 8, **characterized in that** said stream of water is connected to a paper making process.

10. A method according to claim 9, **characterized in that** said stream of water is part of a substantially closed circulation.

11. An arrangement for treating water comprising calcium ions, **characterized in that** the arrangement comprises
a. means for dividing the stream of water flowing in a tube (100) into a first stream and a second stream using a dividing element (101) arranged inside the tube,
b. means for adding alkali (103) into the second stream to raise the pH level of the second stream to at least 8.5 and to precipitate the calcium ions into calcium carbonate in the second stream, and
c. means for combining the first stream and the second stream together.

12. An arrangement according to claim 11, **characterized in that** said dividing element (101) comprises a tube.

13. An arrangement according to claim 12, **characterized in that** said second stream is arranged to flow in said tube (101).

14. An arrangement according to any of claims 11 to 13, **characterized in that** the arrangement is adapted to be connected to a water circulation of a paper making process.

15. A process for producing paper, pulp or board utilizing the method of any of claims 1 to 10 or the arrangement of any of claims 11 to 14.
